# FASCICULE DE BREVET EUROPEEN

(11) **EP 4 054 888 B1**
(45) Date de publication et mention de la délivrance du brevet: **03.01.2024**
(21) Numéro de dépôt: 20797807.3
(22) Date de dépôt: 04.11.2020
(51) Int. Cl.: B60M 1/10, B60M 1/36, B60M 7/00

(54) **SYSTÈME, ET PROCÉDÉ, D'ALIMENTATION PAR LE SOL POUR DES VÉHICULES ÉLECTRIQUES NON-GUIDÉS**
ENERGIEVERSORGUNGS-SYSTEM UND -VERFAHREN FÜR NICHT SPURGEBUNDENE ELEKTROFAHRZEUGE
GROUND-POWERING SYSTEM AND METHOD FOR UNGUIDED ELECTRIC VEHICLES

(30) Priorité: 08.11.2019 FR 1912543
(43) Date de publication de la demande: 14.09.2022
(73) Titulaire: ALSTOM Holdings, 93400 Saint-Ouen-sur-Seine (FR)
(72) Inventeur: DUPRAT, Patrick, 93340 LE RAINCY (FR); HOURTANE, Jean-Luc, 13320 BOUC BEL AIR (FR); GAUCHE, Denis, 06620 LE BAR SUR LOUP (FR); FLAMANC, Emmanuel, 78390 BOIS D'ARCY (FR); VIAL, Clément, 69100 VILLEURBANNE (FR)
(74) Mandataire: Lavoix
(86) Numéro de dépôt international: PCT/EP2020/080982
(87) Numéro de publication internationale: WO 2021/089633

(56) Documents cités:
- EP-A1- 2 923 883
- EP-A1- 2 993 075
- EP-A1- 3 395 604
- WO-A2-2011/071344

## Description

La présente invention concerne un système d'alimentation par le sol pour un véhicule électrique non-guidé.

Un véhicule électrique comporte une batterie rechargeable et un moteur électrique, alimenté par la batterie et permettant de propulser le véhicule.

Pour les véhicules électriques non guidés (c'est-à-dire les camions, les camionnettes, les voitures de tourisme, etc., non contraints de se déplacer le long de voies, en particulier de voies ferrées), il est connu de recharger la batterie du véhicule lorsque celui-ci est à l'arrêt, en connectant la batterie à une borne de recharge, au moyen d'un câble électrique.

Il a été également proposé de recharger la batterie d'un véhicule électrique non guidé au cours de son déplacement par des systèmes d'alimentation par conduction.

Parmi les systèmes d'alimentation par conduction, le document FR 3 019 112 A1 divulgue une chaussée dont la surface est munie de deux rainures parallèles entre elles et s'étendant longitudinalement selon la direction de la chaussée. A l'intérieur de chacune des rainures circule(nt) un ou plusieurs rails d'alimentation en courant électrique.

Pour capter le courant électrique, le véhicule électrique non guidé est muni d'une perche dont l'extrémité est propre à pénétrer dans les rainures de la chaussée de manière à venir en contact électrique avec les rails d'alimentation.

Les rails d'alimentation sont subdivisés en segments longitudinaux.

Un segment est relié à une source de tension d'alimentation au travers d'un interrupteur qui est commandé en fonction d'un signal relatif à la position du véhicule à alimenter.

Ce signal de position est généré lors de la détection, par une boucle magnétique intégrée à la chaussée et circulant le long du segment considéré, d'un signal généré par un dispositif d'émission disposé sur le véhicule, par exemple d'une étiquette du type RFID (pour « Radio Frequency Identification » en anglais). Lors de la réception d'un tel signal de position, un dispositif de commande ferme l'interrupteur de manière à ce que le segment considéré soit connecté électriquement à la source de tension, sous réserve que la vitesse du véhicule vérifie certaines conditions. La vitesse décidant de l'alimentation du segment de rang i est déterminée à partir d'une boucle de vitesse intégrée dans la chaussée au niveau du segment i-1.

L'invention a pour but de proposer un système amélioré d'alimentation par le sol du type par conduction.

A cet effet, suivant un premier aspect, l'invention propose un système d'alimentation par le sol conforme à la revendication 1.

L'invention permet ainsi de décider d'alimenter ou de ne pas alimenter un segment en fonction d'une détermination d'une estimation de la vitesse du véhicule plus représentative de la vitesse du véhicule sur le segment.

Dans des modes de réalisation, le système d'alimentation par le sol pour des véhicules électriques non guidés suivant l'invention comporte en outre une ou plusieurs des caractéristiques des revendications 2 à 7.

Suivant un deuxième aspect, la présente invention propose un procédé d'alimentation par le sol conforme à la revendication 8.

Dans des modes de réalisation, le procédé suivant l'invention comporte en outre une ou plusieurs des caractéristiques des revendication 9 ou 10.

Ces caractéristiques et avantages de l'invention apparaîtront à la lecture de la description qui va suivre, donnée uniquement à titre d'exemple, et faite en référence aux dessins annexés, sur lesquels :
[Fig 1] la figure 1 est une vue représentant schématiquement un véhicule électrique non guidé circulant sur une chaussée équipée du système d'alimentation par le sol dans un mode de réalisation de l'invention ;
[Fig 2] la figure 2 est une vue de dessus de la chaussée de la figure 1;
[Fig 3] la figure 3 est une représentation schématique d'un premier mode de réalisation du système d'alimentation par le sol selon l'invention ;

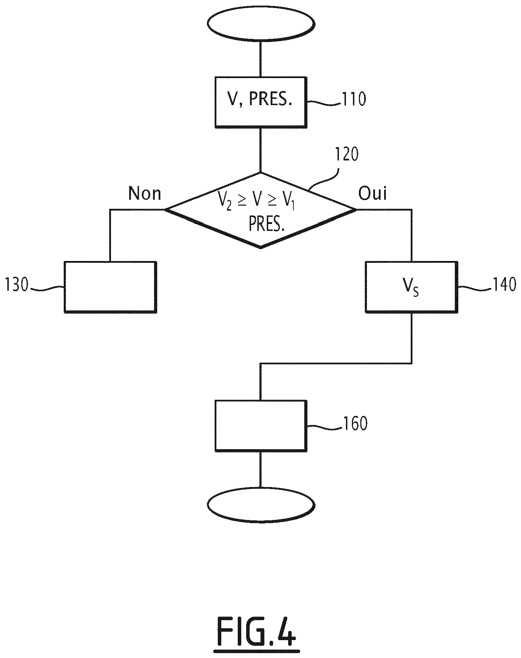

[Fig 4] la figure 4 est une représentation schématique sous forme de blocs d'un procédé d'utilisation du système de la figure 3 ;
[Fig 5] la figure 5 est un chronogramme représentant en fonction du temps l'évolution de signaux électriques utilisés pour calculer la vitesse du véhicule électrique non guidé dans un mode de réalisation de l'invention

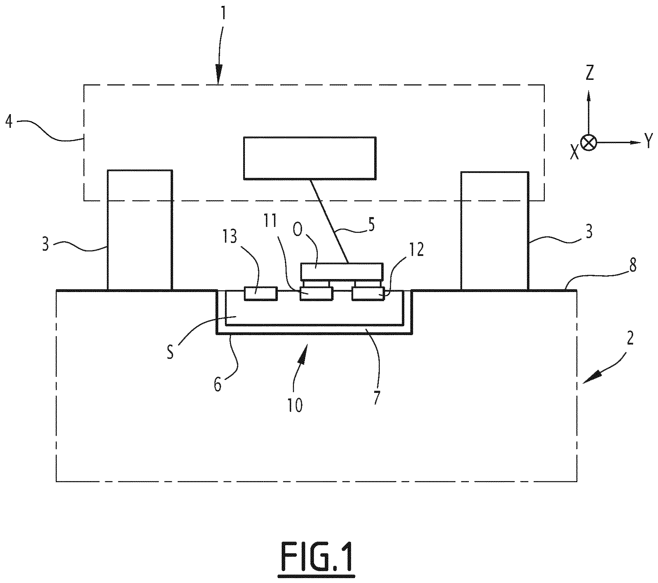

La figure 1 représente un véhicule électrique non guidé 1, par exemple une voiture 1, circulant sur une chaussée 2. Bien évidemment, différents types de véhicules non guidés seront amenés à circuler sur la chaussée 2 en utilisant le système d'alimentation par le sol. Ainsi, le terme de véhicule électrique non guidé regroupe les camions de marchandises, les cars de transport de passagers, les voitures de tourisme, etc.

Un trièdre XYZ est associé de manière classique à la voiture 1 : l'axe X selon la direction longitudinale, orienté vers l'avant ; l'axe Y selon la direction transversale, orienté de gauche à droite ; et l'axe Z selon la direction verticale, orienté de bas en haut.

La voiture 1 comporte une caisse 4 et des roues 3, dont certaines directrices. La voiture 1 comporte des moyens de direction (non représentés) permettant à un conducteur de modifier l'angle des roues directrices dans le plan XY de manière à diriger le véhicule 1.

La voiture 1 comporte une batterie rechargeable et un moteur électrique (non représentés). En traction, ces moyens électriques principaux requièrent une puissance de l'ordre de 30 kW.

La voiture 1 est équipée d'un moyen de captation permettant de collecter une puissance électrique au cours du déplacement de la voiture 1. Les moyens de captation sont référencés de manière générale par le chiffre 5 sur la figure 1.

Le moyen de captation 5 comporte un patin 0 propre à être mis en contact glissant sur une paire de pistes d'alimentation du système d'alimentation par le sol, qui va maintenant être décrit.

La chaussée 2, représentée schématiquement en figures 1, 2 et 3 selon différents angles de vue, comporte une tranchée 6 à l'intérieur de laquelle est positionné le système d'alimentation par le sol, référencé de manière générale par le chiffre 10.

Une fois le système 10 mis en position dans la tranchée 6, celle-ci est remplie de résine 7 de manière à ce que la surface supérieure 8 de la chaussée 2 soit continue sur toute la largeur de celle-ci. La surface supérieure 8 est sensiblement plane.

En position, le système 10 comporte, affleurant à la surface 8 de la chaussée 2
- une piste conductrice de phase 11, connectée électriquement soit à une source de puissance électrique, soit à un potentiel de référence Vref, par exemple de 0 V ;
- une piste conductrice de neutre 12, connectée électriquement soit au retour courant du véhicule soit à un potentiel de référence Vref, par exemple de 0 V ;
- une piste conductrice de protection 13, connectée électriquement à un potentiel de référence Vref, par exemple de 0 V.

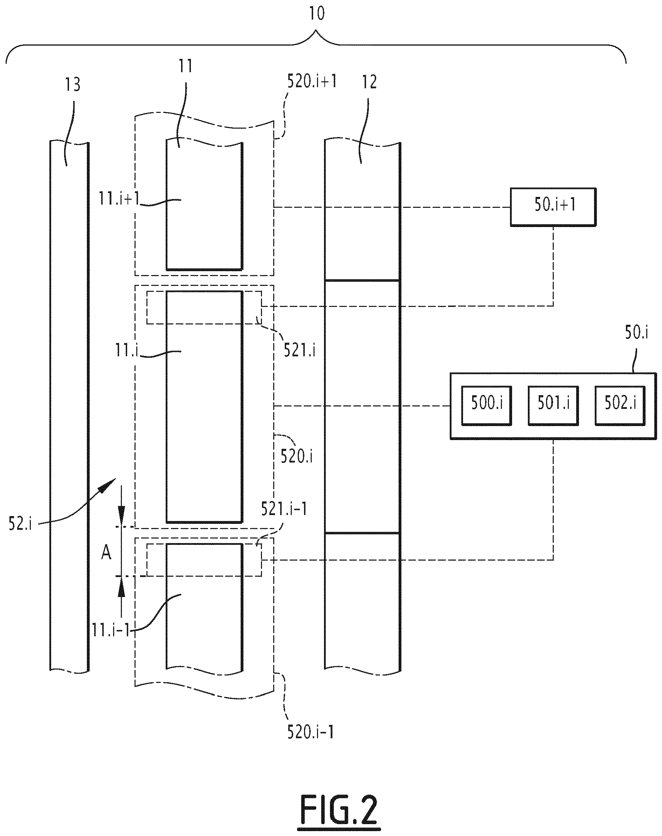

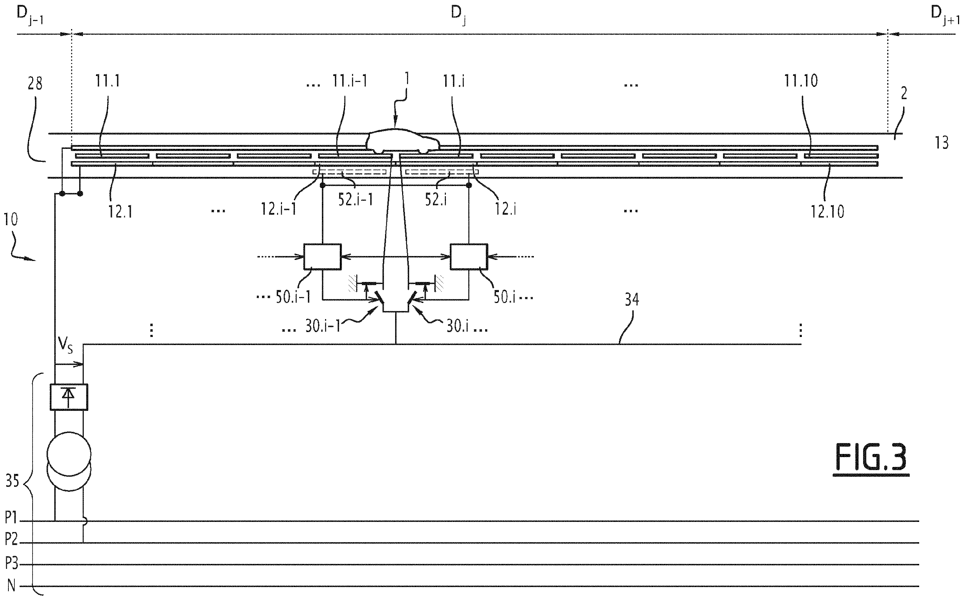

La piste de phase 11 est constituée d'une pluralité de segments (référencés 11.i sur les figures 2 et 3, i = 1 à N, avec N par exemple compris dans la plage [45 ;90], qui, dans un mode de réalisation, présentent par exemple chacun une largeur de 5 cm et une longueur de 11 m.

Les segments sont disposés bout à bout pour constituer la piste de phase 11.

Les segments sont isolés électriquement les uns des autres.

Avantageusement, la piste de neutre 12 est réalisée en utilisant des segments identiques à ceux utilisés pour la piste de phase 11. Ainsi, la piste 12 est constituée d'une pluralité de segments (12.i sur la figure 3) présentant une largeur d'environ 5 cm et une longueur d'environ 11 m.

L'isolation entre les segments consécutifs de la piste de neutre 12 peut être de même nature que celle de la piste de phase 11. Cependant bien qu'une segmentation soit nécessaire pour des raisons mécaniques (dilatation), le niveau de rigidité diélectrique entre segments n'est pas nécessairement aussi élevé que celui entre segments de la piste de phase 11.

La piste de neutre 12 circule parallèlement à la piste de phase 11, sur un premier côté de celle-ci. Le bord latéral de la piste de phase 11 et le bord latéral de la piste de neutre 12, qui sont en regard l'un de l'autre, sont espacés d'une première distance de 15 cm environ.

La piste de protection 13 est constituée d'une pluralité de segments métalliques interconnectés entre eux.

La piste de protection 13 est disposée parallèlement à la piste de phase 11, sur un second côté de celle-ci opposé au premier côté de la piste de phase 11 comportant la piste de neutre 12.

Le bord latéral de la piste de phase 11 et le bord latéral de la piste de protection 13, qui sont en regard l'un de l'autre, sont espacés d'une seconde distance de 15 cm environ.

La paire de pistes d'alimentation, constituée de la piste de phase 11 et de la piste de neutre 12, ainsi que la piste de protection 13 sont affleurantes à la surface 8 de la chaussée 2. Plus précisément, les pistes 11 et 12 font légèrement saillie au-dessus de la surface 8 de la chaussée 2, par exemple d'une hauteur de l'ordre de quelques millimètres, notamment égale à 2 mm. La piste 13 est au niveau de surface 8 de la chaussée 2.

La fonction de la piste de protection 13 est de constituer, sur le second côté, un moyen de collecte des électrons d'un courant de fuite provenant de la piste conductrice de phase 11.

Les fuites de courant vers le premier côté sont collectées par la piste de neutre 12.

Dans le mode de réalisation envisagé, la largeur de la piste de protection 13 est d'environ 1 cm.

Avec ce choix particulier de valeurs pour les dimensions transversales des différentes pistes et de leur espacement mutuel, le système d'alimentation par le sol 10 présente une largeur totale d'environ 50 cm. Cette largeur totale est choisie pour rester inférieure à l'entraxe du plus petit véhicule électrique non-guidé susceptible de circuler sur la chaussée 2 et d'utiliser le système 10.

Lorsque la piste de phase 11 est portée à un potentiel élevé, toute fuite de courant, due par exemple à la présence d'une flaque ou d'un film d'eau sur la surface 8 de la chaussée, est collectée sur le premier côté par la piste de neutre 12 et sur le second côté par la piste de protection 13. Cela empêche que la portion de la surface de la chaussée portée à un potentiel élevé ne s'étende latéralement au-delà de la largeur du système d'alimentation par le sol 10. En choisissant la largeur totale du système d'alimentation par le sol 10 inférieure à l'entraxe du plus petit véhicule autorisé à circuler sur la chaussée 2 et propre à utiliser le système 10, on garantit que si un piéton se trouve latéralement sur le premier ou le second côté d'un segment de la piste de phase 11, mais au-delà soit de la piste de neutre 12 soit de la piste de protection 13, le piéton ne sera pas électrocuté si ce segment est porté à un potentiel élevé.

Pour faciliter la mise en place du système 10, celui-ci comporte un ensemble de support des différentes pistes décrit par exemple dans la demande FR 14 52525.

Une représentation schématique du système 10 est donnée à la figure 3.

Le système 10 est subdivisé en sections longitudinales. La section Dj est située entre des sections adjacentes Dj-1 et Dj+1.

Une section Dj comprend N segments 11.i de la piste de phase 11, avec N >1. Sur la figure 3, dix segments 11.i composent une section Dj.

Chaque segment de la pluralité de segments 11.i d'une section Dj est connecté électriquement, via un interrupteur commandé 30.i dédié, soit à une ligne d'alimentation 34, soit au potentiel de la terre environnante.

La ligne d'alimentation 34 est commune aux différents segments 11.i de la section Dj considérée.

La ligne d'alimentation 34 de la section Dj est connectée à une source de puissance électrique 35.

La source de puissance électrique 35 est adaptée pour délivrer une tension d'alimentation V_{S}, par exemple de 750 V DC. Par exemple, la source 35 est une station relais convertissant un courant triphasé en un courant biphasé, à l'aide d'un transformateur et d'un redresseur.

Un ensemble d'antennes 52.i est disposé au niveau de chaque segment i. L'ensemble d'antennes 52.i comporte une première antenne 520.i nommée antenne de détection 520.i et une deuxième antenne 521.i nommée antenne de vitesse 521.i.

L'antenne de détection 520.i circule dans la chaussée 2, pour former une boucle, dite boucle de détection, autour du segment 11.i (exclusivement autour du segment 11.i, i.e. sans englober de partie de segments qui lui sont adjacents), de manière à détecter la présence d'un véhicule au-dessus du segment 11.i. Plus précisément, les antennes 520.i et 521.i circulent dans des canaux longitudinaux prévus dans chacun des bords latéraux du profilé de support de la piste de phase.

L'antenne de vitesse 521.i circule dans la chaussée 2, pour former une boucle, dite boucle de vitesse, autour d'une portion du segment 11.i correspondant, de manière à contribuer à déterminer la vitesse d'un véhicule.

Dans un mode de réalisation, la boucle de vitesse délimite ainsi une portion de segment, par exemple x% de la longueur d'un segment avec x compris dans la plage [5 ; 50], ou encore dans la plage [10 ; 20] : dans le cas considéré, la longueur de la portion de segment est de valeur L, entre 1 mètre et 4 mètres, préférentiellement entre 2 et 3 mètres.

Dans un mode de réalisation, la boucle de vitesse 521.i est intégralement disposée au sein de la boucle de détection 520.i.

Dans un mode de réalisation, quand le sens de circulation des véhicules électriques non guidés sur la chaussée 2 est dans le sens des indices i croissant, la boucle de vitesse 521.i est par exemple disposée au niveau de l'extrémité du segment i la plus proche du segment i+1, contre l'extrémité correspondante de la boucle de détection 520.i, comme représenté sur la figure 2.

Un émetteur disposé sur le patin 5 d'un véhicule est adapté pour émettre, en continu, un signal radio ayant par exemple une fréquence caractéristique de 500 kHz.

Chaque antenne 520.i, 521.i, est propre à capter le signal émis par l'émetteur, lorsque ce patin passe à proximité, par exemple à moins de 15 cm environ de l'antenne et à générer un signal induit correspondant. Le signal correspondant généré au sein de l'antenne de détection 520.i est appliqué en entrée du dispositif de commande 50.i, tandis que le signal correspondant généré au sein de l'antenne de vitesse 521.i-1 est appliqué en entrée du dispositif de commande 50.i (pour un sens de circulation selon i croissant).

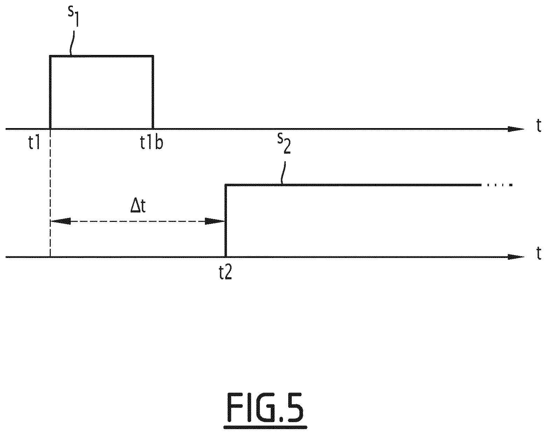

Le signal généré par chaque antenne correspond au signal émis par l'émetteur du véhicule, convolué avec une fonction correspondant à la forme de l'antenne et à la vitesse instantanée du véhicule. Dans le cas présent, le signal comporte un front montant correspondant à l'arrivée du véhicule à moins de 15 cm de l'antenne, un plateau tant que le véhicule est encore au-dessus de l'antenne, puis un front descendant indiquant qu'il s'en éloigne. Les signaux correspondants, S₁ pour l'antenne de vitesse 521.i-1, s₂ pour l'antenne de détection 520.i, sont représentés schématiquement en figure 5 : ils correspondent au passage d'un véhicule dans le sens des i croissants.

Le dispositif de commande 50.i comprend, en référence à la figure 2, un bloc de détermination de vitesse 500.i, un bloc de détection de présence 501.i et un bloc de contrôle 502.i.

Le bloc de détermination de vitesse 500.i est adapté pour déterminer, en fonction du signal s₁ reçu de l'antenne de vitesse 521.i-1 et du signal s₂ reçu de l'antenne de détection 520.i, la vitesse V d'un véhicule donnant lieu à ces signaux, plus exactement en fonction de la différence de temps Δt entre le temps t1 auquel se situe le front montant du signal s₁ provenant de l'antenne de vitesse 521.i-1 et le temps t2 auquel se situe le front montant du signal s₂ provenant de l'antenne de détection 520.i et de la distance D entre celle des extrémités de l'antenne de vitesse 521.i-1 que rencontre d'abord un véhicule circulant dans le sens des i croissants et qui donne lieu au front montant du signal s₁ et celle des extrémités de l'antenne de détection 520.i que rencontre d'abord un véhicule circulant dans le sens des i croissants et qui donne lieu au front montant du signal s₂ : V = D/(t2 -t1 ). Le bloc de détermination de vitesse 500.i est adapté pour transmettre la vitesse V ainsi déterminée au bloc de contrôle 502.i.

Le bloc de détection de présence 501.i est adapté pour détecter la présence d'un véhicule, i.e. pour déterminer à tout instant si un véhicule est présent ou non au-dessus du segment 11.i (dans un mode de réalisation, il est adapté pour déterminer à tout instant si un véhicule est à proximité immédiate du segment 11.i, sachant qu'on entend par « à proximité immédiate » à une distance du segment inférieure à 3 mètres, de préférence inférieure à 1 m, de préférence de l'ordre de la dizaine de cm, suivant le sens de circulation sur la voie, c'est-à-dire que le véhicule se dirige vers le segment et est à une distance inférieure à 3 mètres du segment, de préférence inférieure à 1 m, de préférence de l'ordre de la dizaine de cm), en fonction du signal courant fourni par l'antenne de détection 520.i. Le bloc de détection de présence 501.i est adapté pour transmettre au bloc de contrôle 502.i une information (PRES) indiquant la présence d'un véhicule dès qu'il détecte une telle présence, et indiquant qu'un tel véhicule n'est plus présent dès qu'il le détecte.

Le bloc de contrôle 502.i est adapté pour vérifier un ensemble de conditions et pour en fonction de ces conditions commander l'interrupteur 30.i pour connecter le segment 11.i sélectivement soit à la ligne d'alimentation 34, soit à un potentiel de référence Vref, par exemple de 0 V. Plus spécifiquement, il est adapté pour vérifier qu'une vitesse V transmise par le bloc de détermination de vitesse 500.i est bien comprise entre une valeur V₁ et une valeur V₂, avec V1<V2, par exemple V₁ égale à 30 km/heure, et V₂ = 90 km/heure.

Le bloc de contrôle 502.i est en outre adapté pour, dès qu'il reçoit une information du bloc de détection de présence 501.i indiquant la présence d'un véhicule sur le segment 11.i (ou selon le mode de réalisation, à proximité immédiate du segment 11.i), et après avoir vérifié que la vitesse V du véhicule est bien comprise entre V₁ et V₂, commander l'interrupteur 30.i de manière à connecter le segment 11.i à la ligne d'alimentation 34.

Le bloc de contrôle 502.i est en outre adapté pour, dès qu'il reçoit une information du bloc de détection de présence 501.i indiquant qu'aucun véhicule n'est présent sur le ou à proximité immédiate du segment 11.i, commander l'interrupteur 30.i pour connecter le segment 11.i à un potentiel de référence Vref, par exemple de 0 V.

Le procédé d'utilisation du système 10 venant d'être décrit est le suivant.

Tous les interrupteurs 30.i, i = 1 à N, du segment Dj sont commandés par défaut de manière à ce que les segments 11.i soient reliés à un potentiel de référence Vref, par exemple de 0 V, et ce tant qu'aucun véhicule n'est détecté sur aucun des segments.

Considérons qu'un véhicule 1 s'engage dans le sens des i croissant sur la chaussée et qu'il s'engage depuis le segment 11 .i-1 sur le segment 11.i : dans une étape 110, l'antenne de vitesse 521.i-1 au niveau du segment 11 .i-1 génère un signal s₁ tel que représenté en figure 5, l'antenne de détection 520.i au niveau du segment 11.i génère ensuite un signal s₂ tel que représenté en figure 5 ; le bloc de détermination de vitesse 500.i, sur la base du front montant de chacun de ces signaux reçus, détermine la valeur V de la vitesse du véhicule 1 : V = D/(t2 - t1) et le bloc de détection de présence 501.i détermine qu'un véhicule est présent sur le segment 11.i (ou à proximité immédiate) à partir du signal s₂. La valeur de la vitesse déterminée est transmise au bloc de contrôle 502.i par le bloc de détermination de vitesse 500.i ; l'information (PRES) indiquant une présence de véhicule est transmise au bloc de contrôle 502.i par le bloc de détection de présence 501.i.

Dans une étape 120, le bloc de contrôle 502.i vérifie alors que la valeur de la vitesse V est bien comprise entre V₁ et V₂. Dans le cas positif, et étant donné qu'un véhicule a été détecté comme présent sur le segment 11.i, l'interrupteur 30.i est commandé, dans une étape 140, par le bloc de contrôle 502.i pour connecter le segment 11.i à la ligne d'alimentation 34, portant ainsi le segment 11.i à la tension d'alimentation V_{S}. Dans le cas négatif, l'interrupteur 30.i reste commandé de manière à raccorder le segment 11.i à un potentiel de référence Vref, par exemple de 0 V (étape 130).

Dès que le bloc de détection de présence 501.i détermine qu'il n'y a plus de véhicule présent au-dessus du segment 11.i, en fonction du signal courant fourni par l'antenne de détection 520.i, il en informe le bloc de contrôle 502.i, qui commande alors l'interrupteur 30.i pour connecter le segment 11.i à un potentiel de référence Vref, par exemple de 0 V, dans une étape 160.

Ainsi au fur et à mesure que la voiture 1 se déplace le long de la section Dj, les différents segments de la piste de phase 11 sont ainsi successivement activés en synchronisation avec le déplacement de la voiture 1 le long de la chaussée 2.

Le moyen de collecte 5 de la voiture 1, frottant simultanément sur les pistes de phase 11 et de neutre 12, permet la captation du courant d'alimentation. Un bloc de contrôle (non représenté) du moyen de collecte 5 est propre à commander que le courant d'alimentation en provenance de la source d'alimentation soit utilisé pour recharger ou faire fonctionner les moyens électriques auxiliaires du véhicule, pour recharger la batterie et/ou faire fonctionner le moteur du véhicule.

La voiture 1 parcourt ainsi l'intégralité de la section Dj avant de passer sur la section suivante Dj+1. Le procédé est alors itéré sur cette nouvelle section.

Comme indiqué ci-dessus, le potentiel auquel les segments sont portés est sélectionné en fonction de la vitesse de la voiture 1 et de sa position.

La vitesse utilisée pour décider d'alimenter ou pas le segment 11.i est calculée à partir de deux antennes, l'une disposée au niveau du segment 11.i-1, l'autre au niveau du segment 11.i ; dans le cas considéré, la boucle de vitesse sur le segment 11.i-1 est plus courte que la boucle de détection et est disposée au sein de la boucle de détection du segment 11 .i-1 , au niveau de son extrémité la plus proche du segment 11.i : la décision relative à la valeur de la vitesse ainsi déterminée est donc plus juste, car plus représentative de la vitesse du véhicule sur le segment 11.i.

La présence du véhicule sur un segment est contrôlée en permanence et il est mis fin à l'alimentation d'un segment dès qu'une absence de véhicule sur le segment est détectée.

Si la voiture 1 est prise dans un embouteillage et circule à faible allure (vitesse inférieure à V₁), le potentiel électrique auquel est portée la piste de phase 11 est sans risque pour un piéton d'être électrocuté.

Si la voiture 1 circule trop rapidement (vitesse supérieure à V₂), elle n'est plus alimentée par le sol.

Si la voiture 1 circule normalement à une vitesse comprise entre V₁ et V₂ et qui est associée à la section de la chaussée sur laquelle est engagée la voiture, le potentiel électrique auquel est portée la piste de phase 11 est élevé et correspond à la tension d'alimentation V_{S}. Ce potentiel électrique élevé permet de transférer une puissance importante à la voiture, compatible avec le fonctionnement des moyens électriques principaux de la voiture.

Il est à noter que les segments 11.i sont alimentés successivement, de sorte qu'un seul segment ou éventuellement deux segments sont au potentiel de 750 V à un instant donné. Ainsi, la portion de la surface de la chaussée portée à un potentiel, dangereux pour un piéton, ne s'étend pas longitudinalement au-delà de la longueur d'un segment ou de deux segments au maximum.

Ainsi la sélection adaptée de la source de tension en fonction de la vitesse du véhicule à alimenter participe à la sécurité du système 10.

De nombreuses variantes de réalisation du procédé d'utilisation du système d'alimentation par le sol sont envisageables. Dans des modes de réalisation, la boucle de vitesse est par exemple disposée à un autre endroit au sein de la boucle de détection que celui décrit en référence aux figures.

## Revendications

1. Système d'alimentation par le sol (10) pour des véhicules électriques non-guidés (1), ayant une paire de pistes d'alimentation comportant une piste conductrice dite de phase (11) adaptée pour être portée à une tension d'alimentation, et une piste conductrice dite de neutre (12) pour le retour du courant, la piste de phase étant constituée d'une pluralité de segments (11.i) n° i, i = 1 à N, disposés bout à bout, chaque segment étant isolé électriquement de ses voisins, dans lequel le système comporte :
une source de tension (35) propre à délivrer une tension d'alimentation (V_{S});
un bloc de commutation (30.i) associé à chaque segment et configuré pour sélectivement connecter ledit segment à la source de tension, sélectivement déconnecter ledit segment de la source de tension ;
au moins un bloc de détermination de vitesse (500.i) propre à déterminer la vitesse d'un véhicule électrique non guidé circulant sur une chaussée équipée dudit système d'alimentation ;
un ensemble de premières antennes associées chacune à un desdits segments, telles que chaque première antenne (520.i) s'étend le long du segment (11.i) qui lui est associé ;
un dispositif de commande (50.i) comprenant un bloc de contrôle (502.i) propre à acquérir la vitesse d'un véhicule déterminée par le bloc de détermination de vitesse, à comparer la vitesse mesurée à au moins une vitesse seuil (V₀) et à commander le bloc de commutation en fonction d'au moins le résultat de la comparaison ;
ledit système étant **caractérisé en ce qu'**il comporte en outre un ensemble de deuxièmes antennes associées chacune à un desdits segments, distinctes des premières antennes et telles que chaque deuxième antenne (521.i) s'étend le long du segment (11.i) qui lui est associé ;
chacune des premières et deuxièmes antennes étant adaptée pour capter un signal émis par un émetteur dont est muni un patin du véhicule, et à générer un signal représentatif dudit signal capté ;
le bloc de détermination de vitesse étant configuré pour déterminer une vitesse du véhicule en fonction du signal généré par la première antenne associée à un premier desdits segments et en fonction du signal généré par la deuxième antenne associée à un deuxième segment voisin immédiat dudit premier segment et le précédant selon le sens de circulation des véhicules ;
ledit bloc de contrôle (502.i) étant adapté pour commander le bloc de commutation (30.1) associé audit premier segment pour sélectivement connecter ledit premier segment à la source de tension, sélectivement déconnecter ledit premier segment de la source de tension en fonction de la comparaison de ladite vitesse ainsi déterminée avec ladite vitesse seuil (V₀).

2. Système d'alimentation selon la revendication 1, dans lequel le bloc de détermination de vitesse (500.i) est adapté pour détecter un front montant du signal généré par la première antenne associée au premier segment et un front montant du signal généré par la deuxième antenne associée audit deuxième segment, et à déterminer la vitesse du véhicule en fonction du temps écoulé entre les deux fronts montants et de la distance entre une extrémité de la première antenne associée au premier segment qui soit la plus proche du deuxième segment et une extrémité de la deuxième antenne du deuxième segment la plus distante du premier segment.

3. Système d'alimentation selon la revendication 1 ou 2, dans lequel chaque première antenne et chaque deuxième antenne forment une boucle, la longueur de la deuxième antenne étant inférieure à la longueur de la première antenne.

4. Système d'alimentation selon l'une quelconque des revendications précédentes, dans lequel chaque segment comprend, suivant le sens de circulation des véhicules, une portion amont et une portion aval, chaque deuxième antenne formant une boucle autour de la portion aval du segment auquel elle est associée, la longueur de la portion aval étant comprise entre 5% et 50% de la longueur du segment

5. Système d'alimentation selon la revendication 4, dans lequel chaque première antenne forme une boucle autour du segment auquel elle est associée, la longueur de la première antenne étant supérieure ou égale à la longueur du segment.

6. Système d'alimentation selon l'une quelconque des revendications précédentes, dans lequel le dispositif de commande (50.i) est configuré pour déterminer si un véhicule électrique non guidé est en train de circuler ou non sur le premier segment ou est à proximité immédiate du premier segment en fonction du signal généré par la première antenne associée audit premier segment, pour ne commander le bloc de commutation (30.1) associé audit premier segment pour connecter ledit premier segment à la source de tension que si il a été déterminé qu'un véhicule est en train de circuler sur le premier segment ou est à proximité immédiate du premier segment et pour, dès qu'il détermine qu'aucun véhicule électrique n'est en train de circuler sur ledit premier segment ou est à proximité immédiate dudit premier segment, déconnecter ledit premier segment de la source de tension.

7. Système d'alimentation selon l'une quelconque des revendications précédentes, dans lequel le bloc de contrôle (502.i) est adapté pour si la vitesse mesurée est inférieure à une première vitesse seuil ou supérieure à une seconde vitesse seuil supérieure à la première vitesse seuil, commander le bloc de commutation de façon à ce que le premier segment soit déconnecté de la source d'alimentation.

8. Procédé d'alimentation par le sol pour des véhicules électriques non-guidés (1) par un système (10) d'alimentation par le sol ayant une paire de pistes d'alimentation comportant une piste conductrice dite de phase (11) adaptée pour être portée à une tension d'alimentation, et une piste conductrice dite de neutre (12) pour le retour du courant, la piste de phase étant constituée d'une pluralité de segments (11.i) n° i, i = 1 à N, disposés bout à bout, chaque segment étant isolé électriquement de ses voisins, un ensemble de premières antennes étant associées chacune à un desdits segments, telles que chaque première antenne (520.i) s'étend le long du segment (11.i) qui lui est associé, ledit procédé comportant les étapes suivantes :
- délivrance d'une tension d'alimentation (V_{S}) par une source de tension (3);
- sélectivement connecter ledit segment à la source de tension, sélectivement déconnecter ledit segment de la source de tension, par un bloc de commutation (30.i) associé à chaque segment ;
- déterminer la vitesse d'un véhicule électrique non guidé circulant sur une chaussée équipée dudit système d'alimentation par un bloc de détermination de vitesse (500.i) ;
- par un dispositif de commande (50.i) comprenant un bloc de contrôle (502.i) : acquérir la vitesse d'un véhicule déterminée par le bloc de détermination de vitesse, comparer la vitesse mesurée à au moins une vitesse seuil (V₀) et commander le bloc de commutation en fonction d'au moins le résultat de la comparaison ;
ledit procédé étant **caractérisé en ce qu'**il comporte les étapes suivantes, le système comportant en outre un ensemble de deuxièmes antennes associées chacune à un desdits segments, distinctes des premières antennes et telles que chaque deuxième antenne (521.i) s'étend le long du segment (11.i) qui lui est associé :
capter, par chacune des premières et deuxièmes antennes, un signal émis par un émetteur dont est muni un patin du véhicule, et générer un signal représentatif dudit signal capté;
déterminer, par le bloc de détermination de vitesse, une vitesse du véhicule en fonction du signal généré par la première antenne associée à un premier desdits segments et en fonction du signal généré par la deuxième antenne associée à un deuxième segment voisin immédiat dudit premier segment et le précédant selon le sens de circulation des véhicules ;
commander, par ledit bloc de contrôle (502.i), le bloc de commutation (30.1) associé audit premier segment pour sélectivement connecter ledit premier segment à la source de tension, sélectivement déconnecter ledit premier segment de la source de tension en fonction de la comparaison de ladite vitesse ainsi déterminée avec ladite vitesse seuil (V₀).

9. Procédé d'alimentation selon la revendication 8, comprenant les étapes de :
détecter, par le bloc de détermination de vitesse (500.i), un front montant du signal généré par la première antenne associée au premier segment et un front montant du signal généré par la deuxième antenne associée audit deuxième segment, et
déterminer la vitesse du véhicule en fonction du temps écoulé entre les deux fronts montants et de la distance entre une extrémité de la première antenne associée au premier segment qui soit la plus proche du deuxième segment et une extrémité de la deuxième antenne du deuxième segment la plus distante du premier segment.

10. Procédé d'alimentation selon la revendication 8 ou 9, selon lequel chaque première antenne et chaque deuxième antenne forment une boucle, la longueur de la deuxième antenne étant inférieure à la longueur de la première antenne.

## Patentansprüche

1. Bodenstromversorgungssystem (10) für ungelenkte Elektrofahrzeuge (1), die ein Paar von Versorgungsspuren aufweisen, umfassend eine sogenannte Phasenleiterbahn (11), die angepasst ist, um auf eine Versorgungsspannung gebracht zu werden, und eine sogenannte Neutralleiterbahn (12) für die Stromrückleitung, wobei die Phasenleiterbahn aus einer Vielzahl von Segmenten (11.i) Nr. i, i = 1 bis N, besteht, die Ende an Ende angeordnet sind, wobei jedes Segment von seinen Nachbarn elektrisch isoliert ist, wobei das System Folgendes umfasst:
eine Spannungsquelle (35), die geeignet ist, um eine Versorgungsspannung (Vₛ) bereitzustellen;
einen Schaltblock (30.i), der mit jedem Segment assoziiert und konfiguriert ist, um das Segment selektiv mit der Spannungsquelle zu verbinden, das Segment selektiv von der Spannungsquelle zu trennen;
mindestens einen Geschwindigkeitsbestimmungsblock (500.i), der geeignet ist, um die Geschwindigkeit eines ungelenkten Elektrofahrzeugs zu bestimmen, das auf einer Fahrbahn fährt, die mit dem genannten Stromversorgungssystem ausgestattet ist;
einen Satz von ersten Antennen, die jeweils mit einem der Segmente assoziiert sind, sodass jede erste Antenne (520.i) sich entlang des Segments (11.i) erstreckt, das mit ihr assoziiert ist;
eine Steuervorrichtung (50.i), umfassend eine Steuerblock (502.i), der geeignet ist, um die von dem Geschwindigkeitsbestimmungsblock bestimmte Geschwindigkeit eines Fahrzeugs zu erfassen, die gemessene Geschwindigkeit mit mindestens einem Geschwindigkeitsschwellenwert (V₀) zu vergleichen und den Schaltblock abhängig von mindestens dem Resultat des Vergleichs zu steuern;
wobei das System **dadurch gekennzeichnet ist, dass** es ferner eine Gruppe von zweiten Antennen umfasst, die mit jeweils einem der Segmente assoziiert sind, sich von den ersten Antennen unterscheiden und derart sind, dass sich jede zweite Antenne (521.i) entlang des Segments (11.i) erstreckt, das mit ihr assoziiert ist;
wobei jede von der ersten und der zweiten Antenne angepasst ist, um ein Signal zu empfangen, das von einem Sender emittiert wird, mit dem eine Kufe des Fahrzeugs versehen ist, und ein Signal zu erzeugen, das repräsentativ für das erfasste Signal ist;
wobei der Geschwindigkeitsbestimmungsblock konfiguriert ist, um eine Geschwindigkeit des Fahrzeugs abhängig von dem Signal, das von der ersten Antenne erzeugt wird, die mit einem ersten der Segmente assoziiert ist, und abhängig von dem Signal, das von der zweiten Antenne erzeugt wird, die mit einem zweiten Segment assoziiert ist, das dem ersten Segment unmittelbar benachbart ist und ihm gemäß der Fahrtrichtung der Fahrzeuge vorausgeht, zu bestimmen;
wobei der Steuerblock (502.i) angepasst ist, um den Schaltblock (30.1), der mit dem ersten Segment assoziiert ist, zu steuern, um abhängig von dem Vergleich der somit bestimmten Geschwindigkeit mit der Geschwindigkeitsschwellenwert (V₀) das erste Segment selektiv mit der Spannungsquelle zu verbinden, das erste Segment selektiv von der Spannungsquelle zu trennen.

2. Stromversorgungssystem nach Anspruch 1, wobei der Geschwindigkeitsbestimmungsblock (500.i) angepasst ist, um eine ansteigende Flanke des Signals, das von der ersten Antenne erzeugt wird, die mit dem ersten Segment assoziiert ist, und eine ansteigende Flanke des Signals, das von der zweiten Antenne erzeugt wird, die mit dem zweiten Segment assoziiert ist, zu erfassen und die Geschwindigkeit des Fahrzeugs abhängig von der zwischen den zwei ansteigenden Flanken verstrichenen Zeit und dem Abstand zwischen einem Ende der mit dem ersten Segment assoziierten ersten Antenne, das dem zweiten Segment am nächsten ist, und einem Ende der zweiten Antenne des zweiten Segments, das von dem ersten Segment am weitesten entfernt ist, zu bestimmen.

3. Versorgungssystem nach Anspruch 1 oder 2, wobei jede erste Antenne und jede zweite Antenne eine Schleife bilden, wobei die Länge der zweiten Antenne kleiner ist als die Länge der ersten Antenne ist.

4. Versorgungssystem nach einem der vorherigen Ansprüche, wobei jedes Segment entlang der Fahrtrichtung der Fahrzeuge einen stromaufwärtigen Abschnitt und einen stromabwärtigen Abschnitt umfasst, wobei jede zweite Antenne eine Schleife um den stromabwärtigen Abschnitt des Segments bildet, mit dem sie assoziiert ist, wobei die Länge des stromabwärtigen Abschnitts zwischen 5 % und 50 % der Länge des Segments ist.

5. Versorgungssystem nach Anspruch 4, wobei jede erste Antenne eine Schleife um das Segment bildet, mit dem sie assoziiert ist, wobei die Länge der ersten Antenne größer als oder gleich wie die Länge des Segments ist.

6. Versorgungssystem nach einem der vorherigen Ansprüche, wobei die Steuervorrichtung (50.i) konfiguriert ist, um basierend auf dem Signal, das von der mit dem ersten Segment assoziierten ersten Antenne erzeugt wird, zu bestimmen, ob ein ungelenktes Elektrofahrzeug auf dem ersten Segment fährt oder in unmittelbarer Nähe des ersten Segments ist, um den Schaltblock (30.1), die dem ersten Segment assoziiert ist, um das erste Segment nur dann mit der Spannungsquelle zu verbinden, wenn bestimmt wurde, dass ein Fahrzeug auf dem ersten Segment fährt oder in unmittelbarer Nähe des ersten Segments ist, und um, sobald er bestimmt, dass kein Elektrofahrzeug auf dem ersten Segment fährt oder in unmittelbarer Nähe des ersten Segments ist, das erste Segment von der Spannungsquelle zu trennen.

7. Versorgungssystem nach einem der vorherigen Ansprüche, wobei der Steuerblock (502.i) angepasst ist, um, wenn die gemessene Geschwindigkeit niedriger als ein erster Geschwindigkeitsschwellenwert oder größer als ein zweiter Geschwindigkeitsschwellenwert ist, der größer ist als der erste Geschwindigkeitsschwellenwert, den Schaltblock zu steuern, sodass das erste Segment von der Versorgungsquelle getrennt wird.

8. Bodenstromversorgungsverfahren für ungelenkte Elektrofahrzeuge (1) durch ein Bodenstromversorgungssystem (10), das ein Paar Versorgungsspuren aufweist, umfassend eine sogenannte Phasenleiterbahn (11), die angepasst ist, um auf eine Versorgungsspannung gebracht zu werden, und eine sogenannte Neutralleiterbahn (12) für die Stromrückleitung, wobei die Phasenleiterbahn aus einer Vielzahl von Segmenten (11.i) Nr. i, i = 1 bis N, besteht, die Ende an Ende angeordnet sind, wobei jedes Segment von seinen Nachbarn elektrisch isoliert ist, einen Satz von ersten Antennen, die jeweils mit einem der Segmente assoziiert sind, sodass jede erste Antenne (520.i) sich entlang des Segments (11.i) erstreckt, das mit ihr assoziiert ist, das Verfahren umfassend die folgenden Schritte:
- Zuführen einer Versorgungsspannung (Vₛ) durch eine Spannungsquelle (3);
- selektives Verbinden des Segments mit der Spannungsquelle, selektives Trennen des Segments von der Spannungsquelle, durch einen Schaltblock (30.i), der mit jedem Segment assoziiert ist;
- Bestimmen der Geschwindigkeit eines ungelenkten Elektrofahrzeugs, das auf einer mit dem Stromversorgungssystem ausgestatteten Fahrbahn fährt, durch einen Geschwindigkeitsbestimmungsblock (500.i);
- eine Steuervorrichtung (50.i), umfassend eine Steuerblock (502.i): Erfassen der von dem Geschwindigkeitsbestimmungsblock bestimmten Geschwindigkeit eines Fahrzeugs, Vergleichen der gemessenen Geschwindigkeit mit mindestens einem Geschwindigkeitsschwellenwert (V₀) und Steuern des Schaltblocks abhängig von mindestens dem Resultat des Vergleichs;
wobei das Verfahren **dadurch gekennzeichnet ist, dass** es die folgenden Schritte umfasst, das System ferner umfassend eine Gruppe von zweiten Antennen, die mit jeweils einem der Segmente assoziiert sind, sich von den ersten Antennen unterscheiden und derart sind, dass sich jede zweite Antenne (521.i) entlang des Segments (11.i) erstreckt, das mit ihr assoziiert ist:
Erfassen, durch jede der ersten und zweiten Antennen, eines Signals, das von einem Sender emittiert wird, mit dem eine Kufe des Fahrzeugs versehen ist, und ein Signal zu erzeugen, das repräsentativ für das erfasste Signal ist; Bestimmen, durch den Geschwindigkeitsbestimmungsblock, einer Geschwindigkeit des Fahrzeugs abhängig von dem Signal, das von der ersten Antenne erzeugt wird, die mit einem ersten der Segmente assoziiert ist, und abhängig von dem Signal, das von der zweiten Antenne erzeugt wird, die mit einem zweiten Segment assoziiert ist, das dem ersten Segment unmittelbar benachbart ist und ihm gemäß der Fahrtrichtung der Fahrzeuge vorausgeht;
Steuern, durch den Steuerblock (502.i), des mit dem ersten Segment assoziierten Schaltblocks (30.1), um abhängig von dem Vergleich der somit bestimmten Geschwindigkeit mit der Geschwindigkeitsschwellenwert (V₀) das erste Segment selektiv mit der Spannungsquelle zu verbinden, das erste Segment selektiv von der Spannungsquelle zu trennen.

9. Verfahren nach Anspruch 8, umfassend die folgenden Schritte:
Erkennen, durch den Geschwindigkeitsbestimmungsblock (500.i), einer steigenden Flanke des Signals, das von der ersten Antenne erzeugt wird, die mit dem ersten Segment assoziiert ist, und einer steigenden Flanke des Signals, das von der zweiten Antenne erzeugt wird, die mit dem zweiten Segment assoziiert ist, und
Bestimmen der Geschwindigkeit des Fahrzeugs abhängig von der zwischen den zwei ansteigenden Flanken verstrichenen Zeit und dem Abstand zwischen einem Ende der mit dem ersten Segment assoziierten ersten Antenne, das dem zweiten Segment am nächsten ist, und einem Ende der zweiten Antenne des zweiten Segments, das von dem ersten Segment am weitesten entfernt ist.

10. Versorgungsverfahren nach Anspruch 8 oder 9, wobei jede erste Antenne und jede zweite Antenne eine Schleife bilden, wobei die Länge der zweiten Antenne kleiner ist als die Länge der ersten Antenne ist.

## Claims

1. A ground-based power supply system (10) for unguided electric vehicles (1), having a pair of supply tracks comprising a phase conductor track (11) adapted to be set to a supply voltage, and a so-called neutral conductor track (12) for current return, the phase track consisting of a plurality of segments (11.i) No. i, i = 1 to N, arranged end to end, each segment being electrically isolated from its neighbours, wherein the system comprises:
a voltage source (35) capable of supplying a supply voltage (Vₛ);
a switching block (30.i) associated with each segment and configured to selectively connect said segment to the voltage source and selectively disconnect said segment from the voltage source;
at least one speed determination unit (500.i) capable of determining the speed of an unguided electric vehicle travelling on a roadway equipped with said power supply system;
a set of first antennas each associated with one of said segments, such that each first antenna (520.i) extends along the segment (11.i) associated with it;
a control device (50.i) comprising a control unit (502.i) capable of acquiring the speed of a vehicle determined by the speed determination unit, comparing the measured speed with at least one threshold speed (V₀) and controlling the switching unit as a function of at least the result of the comparison;
said system being **characterised in that** it further comprises a set of second antennas each associated with one of said segments, distinct from the first antennas and such that each second antenna (521.i) extends along the segment (11.i) associated with it;
each of the first and second antennas being adapted to pick up a signal emitted by a transmitter with which a skid of the vehicle is equipped, and to generate a signal representative of said picked-up signal;
the speed determination unit being configured to determine a speed of the vehicle as a function of the signal generated by the first antenna associated with a first of the said segments and as a function of the signal generated by the second antenna associated with a second segment immediately adjacent to the said first segment and preceding it, in the direction of travel of the vehicles;
said control unit (502.i) being adapted to control the switching unit (30.1) associated with said first segment to selectively connect said first segment to the voltage source, selectively disconnect said first segment from the voltage source as a function of the comparison of said speed thus determined with said threshold speed (V₀).

2. The power supply system according to claim 1, wherein the speed determination unit (500.i) is adapted to detect a rising edge of the signal generated by the first antenna associated with the first segment and a rising edge of the signal generated by the second antenna associated with said second segment, and to determine the speed of the vehicle as a function of the time elapsed between the two rising edges and the distance between an end of the first antenna associated with the first segment which is closest to the second segment and an end of the second antenna of the second segment which is furthest from the first segment.

3. The power supply system according to claim 1 or 2, wherein each first antenna and each second antenna form a loop, the length of the second antenna being less than the length of the first antenna.

4. The power supply system according to any one of the preceding claims, wherein each segment comprises, in the direction of travel of the vehicles, an upstream portion and a downstream portion, each second antenna forming a loop around the downstream portion of the segment with which it is associated, the length of the downstream portion being between 5% and 50% of the length of the segment.

5. The power supply system according to claim 4, wherein each first antenna forms a loop around the segment with which it is associated, the length of the first antenna being greater than or equal to the length of the segment.

6. The power supply system according to any one of the preceding claims, wherein the control device (50.i) is configured to determine whether or not an unguided electric vehicle is travelling on the first segment or is in the immediate vicinity of the first segment as a function of the signal generated by the first antenna associated with said first segment, to control the switching block (30.1) associated with said first segment in order to connect said first segment to the voltage source only if it has been determined that a vehicle is travelling on the first segment or is in the immediate vicinity of the first segment and, as soon as it has determined that no electric vehicle is travelling on said first segment or is in the immediate vicinity of said first segment, to disconnect said first segment from the voltage source.

7. The power supply system according to any one of the preceding claims, wherein the control unit (502.i) is adapted, if the measured speed is less than a first threshold speed or greater than a second threshold speed greater than the first threshold speed, to control the switching block so that the first segment is disconnected from the power source.

8. A ground-based power supply method for unguided electric vehicles (1) by a ground-based power supply system (10) having a pair of power supply tracks comprising a phase conductor track (11) adapted to be set to a supply voltage, and a so-called neutral conductor track (12) for current return, the phase track consisting of a plurality of segments (11.i) No. i, i = 1 to N, arranged end to end, each segment being electrically isolated from its neighbours, a set of first antennas each being associated with one of the said segments, such that each first antenna (520.i) extends along the segment (11.i) associated with it, said method comprising the following steps:
- delivering a supply voltage (Vₛ) by a voltage source (3);
- selectively connecting said segment to the voltage source, selectively disconnecting said segment from the voltage source, by a switching unit (30.i) associated with each segment;
- determining the speed of an unguided electric vehicle travelling on a roadway equipped with said power supply system by means of a speed determination unit (500.i);
- by a control device (50.i) comprising a control unit (502.i): acquiring the speed of a vehicle determined by the speed determination unit, comparing the measured speed with at least one threshold speed (V₀) and controlling the switching unit as a function of at least the result of the comparison;
said method being **characterised in that** it comprises the following steps, the system further comprising a set of second antennas each associated with one of said segments, distinct from the first antennas and such that each second antenna (521.i) extends along the segment (11.i) associated with it:
picking up, by each of the first and second antennas, a signal emitted by a transmitter with which a skid of the vehicle is equipped, and generating a signal representative of said picked-up signal;
determining, by the speed determination unit, a speed of the vehicle as a function of the signal generated by the first antenna associated with a first of the said segments and as a function of the signal generated by the second antenna associated with a second segment immediately adjacent to the said first segment and preceding it, in the direction of travel of the vehicles;
controlling, by said control unit (502.i), the switching unit (30.1) associated with said first segment to selectively connect said first segment to the voltage source, selectively disconnect said first segment from the voltage source as a function of the comparison of said speed thus determined with said threshold speed (V₀).

9. A power supply method according to claim 8, comprising the steps of:
detecting, by the speed determination unit (500.i), a rising edge of the signal generated by the first antenna associated with the first segment and a rising edge of the signal generated by the second antenna associated with said second segment, and
determining the speed of the vehicle as a function of the time elapsed between the two rising edges and the distance between an end of the first antenna associated with the first segment that is closest to the second segment and an end of the second antenna of the second segment that is furthest from the first segment.

10. The power supply method according to claim 8 or 9, whereby each first antenna and each second antenna form a loop, the length of the second antenna being less than the length of the first antenna.
